# FASCICULE DE BREVET EUROPEEN

(11) **EP 1 131 640 B1**
(45) Date de publication et mention de la délivrance du brevet: **01.08.2007**
(21) Numéro de dépôt: 00958687.6
(22) Date de dépôt: 14.08.2000
(51) Int. Cl.: G01P 13/00, G01K 11/12, G01D 21/02

(54) **DISPOSITIF DE VISUALISATION DU DEBIT ET DE LA TEMPERATURE D'UN FLUIDE**
ANZEIGEVORRICHTUNG FUR STRÖMUNG UND TEMPERATUR EINES FLUSSIGKEITS
DEVICE FOR VISUAL DISPLAY OF THE FLOW RATE AND THE TEMPERATURE OF A FLUID

(30) Priorité: 23.09.1999 FR 9911922
(43) Date de publication de la demande: 12.09.2001
(73) Titulaire: Enviro Developpement Z.I. Nord, 86100 Chatellerault (FR)
(72) Inventeur: KAZAZIAN, Thierry, F-75011 Paris (FR)
(86) Numéro de dépôt international: PCT/FR2000/002321
(87) Numéro de publication internationale: WO 2001/022096

(56) Documents cités:
- EP-A- 0 446 365
- DE-U- 29 611 332
- GB-A- 2 267 969
- NL-C- 1 005 957
- US-A- 4 773 767
- US-A- 5 806 528

## Description

La présente invention concerne un dispositif apte à être fixé à la sortie d'un tube ou d'un tuyau souple permettant de visualiser le débit d'un fluide, en particulier de l'eau, ainsi que sa température à la sortie du tube ou du tuyau.

Les ressources planétaires en eau potable ne sont pas inépuisables et l'un des enjeux majeurs des années à venir sera la maîtrise de la consommation de l'eau.

L'accès aux ressources d'eau est aisé et les utilisateurs, notamment des pays industrialisés, sont peu enclins à surveiller leur consommation.

Cependant, il est difficile de maîtriser sa consommation d'eau lorsque l'on ne se rend pas exactement compte de ce que l'on consomme.

Un autre inconvénient de cet accès aisé à l'eau sont les risques d'accidents domestiques.

En effet, un grand nombre de ces accidents domestiques, en particulier chez les enfants, provient de brûlures provoquées par une température de l'eau beaucoup trop élevée.

La généralisation de dispositifs de type mitigeur n'a fait qu'amplifier le phénomène, la séparation physique des alimentations en eau chaude et eau froide ayant disparue.

Tout comme la consommation d'eau que l'utilisateur peut difficilement maîtriser sans se rendre compte valablement du débit, la température ne peut être efficacement contrôlée si ce même utilisateur ne peut l'apprécier de façon fiable, et ce sans avoir à mettre son doigt ou sa main sous le jet d'eau.

Le document EP-A-446365 découvre un dispositif délivrant de l'eau et capable de détecter la quantité d'eau délivrée ainsi que détecter sa température. Le document GB-A-2267969 découvre un dispositif capable de visualiser seul le débit d'un fluide ou les moyens de visualisation comprennent une hélice.

Dans ce contexte, la présente invention propose un dispositif permettant d'apprécier le débit ainsi que la température d'un fluide, par exemple de l'eau, à la sortie d'un tube ou d'un tuyau, afin de maîtriser la consommation de ce fluide et d'éviter les accidents domestiques.

A cet effet, selon l'invention, le dispositif apte à être fixé à la sortie d'un tube ou d'un tuyau délivrant un fluide est caractérisé en ce qu'il comprend des moyens permettant de visualiser le débit ainsi que des moyens permettant de visualiser la température de sortie dudit fluide.

Selon l'invention les moyens de visualisation du débit et les moyens de visualisation de la température sont constitués d'un même élément et comprennent une hélice.

Selon l'invention, les moyens de visualisation de la température sont réalisés à partir d'un matériau réagissant aux variations de température.

Selon une forme préférée de réalisation, les moyens de visualisation du débit et de la température du fluide sont situés dans l'axe de sortie du fluide et le dispositif comporte un corps, sensiblement cylindrique, apte à recevoir les moyens de visualisation du débit et de la température du fluide.

Afin de permettre la visualisation, le corps possède une fenêtre de visualisation transparente ou, de préférence, est totalement transparent.

En outre, et de façon avantageuse, le dispositif comporte des moyens de filtration, de traitement du fluide ou des réactifs aux polluants inclus dans ce fluide.

L'invention sera mieux comprise à la lumière de la description qui suit, se rapportant à un exemple de réalisation illustratif mais en aucun cas limitatif, en référence aux dessins annexés dans lesquels :
- La figure 1 est une vue du dispositif de l'invention selon une première forme de réalisation raccordé à un tube d'alimentation ;
- La figure 2 est une vue de côté en coupe du dispositif selon une seconde forme de réalisation ;
- La figure 3 est une vue en perspective éclatée d'une variante du dispositif de la figure 2.

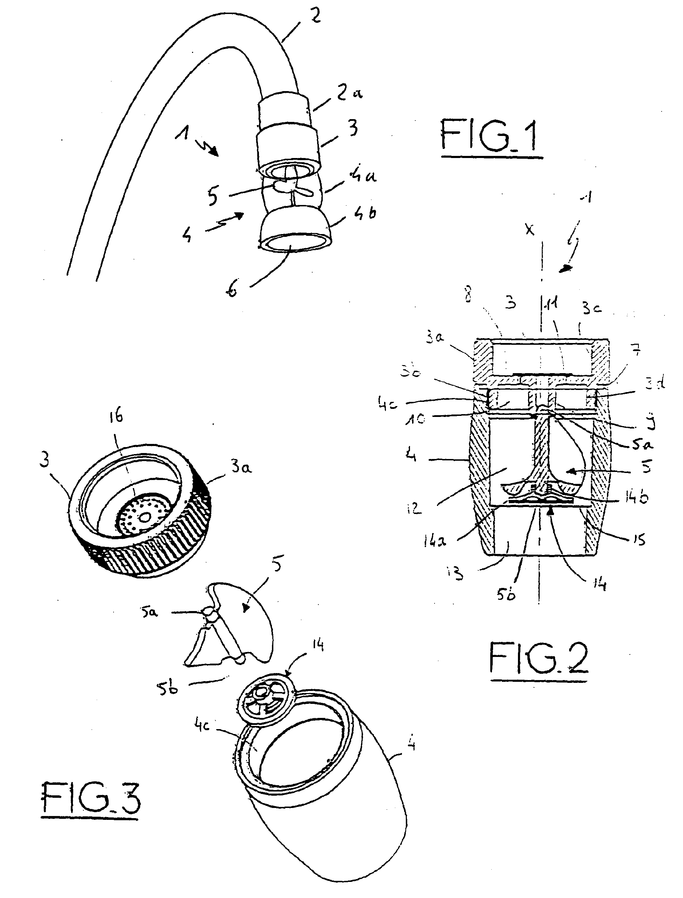

La figure 1 représente une première forme de réalisation du dispositif 1 de l'invention, raccordé à un tube 2 d'alimentation en eau de forme classique, lui-même relié à un mitigeur ou à un ou plusieurs robinets ainsi qu'à une source d'eau (non représentés).
Les termes "proximal" et "distal" s'entendent par rapport au sens de l'écoulement.

Le dispositif 1, de forme générale-sensiblement cylindrique,-comporte une bague 3 sensiblement cylindrique permettant de fixer l'ensemble du dispositif 1 à l'extrémité 2a du tube 2, dans son prolongement. -Cette bague 3 sera décrite plus en détail en référence à la figure 2.

Le dispositif 1 comporte également un corps 4, relié à la bague 3 dans son prolongement, et composé d'une partie proximale 4a et d'une partie distale 4b.

La partie proximale 4a, de forme sensiblement cylindrique-et légèrement convexe, est apte à recevoir, dans l'enceinte qu'elle délimite, une hélice 5 d'axe de rotation colinéaire à l'axe de l'écoulement.

L'hélice 5 présente toute forme lui permettant d'être entraînée en rotation par l'écoulement du fluide à travers le dispositif 1 et en particulier à travers le corps 4.

La partie proximale 4a est réalisée dans un matériau transparent afin que l'utilisateur puisse voir en permanence l'hélice 5 placée à l'intérieur.

La partie distale 4b du corps 4 présente une forme sensiblement cylindrique, légèrement évasée dans le sens de l'écoulement, et possède une cavité 6 au sein de laquelle peuvent être introduits divers accessoires tels que pastilles ou filtres incluant des charbons actifs, ou tout autre organe apte à traiter l'eau ou à en indiquer la teneur en polluants.

La figure 2 représente, en coupe, une autre forme de réalisation du dispositif 1 qui diffère de celui de la figure 1 notamment par la forme du corps 4 et de l'hélice 5.

On retrouve la bague 3 de fixation du dispositif 1 à l'extrémité 2a du tube d'alimentation 2, qui porte la même référence que la bague de la figure 1 car toutes deux présentent des ressemblances fonctionnelles.

Cette bague 3 possède une forme générale sensiblement annulaire d'axe X colinéaire à l'axe de l'écoulement du fluide à la sortie de l'extrémité 2a du tube 2.

La surface extérieure de la bague 3 est en deux parties, séparées par un épaulement 7, une partie extérieure proximale 3a et une partie extérieure distale 3b.

De la même façon, l'alésage intérieur de la bague 3 est divisée en deux parties, séparées par un retour radial formant une couronne 8, une partie intérieure proximale 3c et une partie intérieure distale 3d.

La bague 3 est fixée à l'extrémité 2a du tube 2 par tout moyen connu tel qu'un filetage sur l'une des parties proximales de la bague 3, soit extérieure 3a soit intérieure 3c, ou par emmanchement en force.

La couronne 8 comporte une partie tubulaire centrale 9 d'axe colinéaire à l'axe X.

Cette partie tubulaire centrale 9 délimite avec la partie intérieure distale 3d une chambre annulaire 10. La longueur de la partie tubulaire centrale 9 suivant l'axe X est, dans la forme de réalisation de la figure 2, sensiblement égale à la longueur de la partie intérieure distale 3d de la bague 3, mais peut .être de longueur différente dans d'autres formes de réalisation.

Une multitude de perçages 11, uniformément répartis en cercle sur la couronne 8, permettent le passage du fluide à travers le retour radial 8 jusqu'à la chambre annulaire 10.en délivrant un débit calibré appelé "débit Z", apte à permettre des économies de fluide.

La partie extérieure distale 3b de la bague 3 possède un filetage extérieur sur lequel est vissé le corps 4 du dispositif 1 grâce à un filetage intérieur correspondant 4c.

Le corps 4, sensiblement cylindrique, légèrement convexe et transparent sur toute sa longueur dans la direction de l'axe X, possède deux cavités intérieures 12 et 13 sensiblement cylindriques également.

Tout comme la cavité 6 de la forme de réalisation de la figure 1, la cavité 13 peut recevoir tout type d'organe apte à améliorer la qualité de l'eau tel qu'une cartouche filtrante ou des réactifs aux différents polluants classiques de l'eau.

Une hélice 5, d'axe colinéaire à l'axe X, est montée à rotation à l'intérieur de la cavité 12-entre deux paliers, un palier supérieur, constitué par la partie tubulaire centrale 9 de la couronne 8, et un palier inférieur 14 reposant sur un épaulement 15 séparant les cavités 12, 13.

Le palier inférieur 14 comporte une partie annulaire 14a, prenant appui sur l'épaulement 15, reliée à une partie centrale tubulaire 14b, d'axe colinéaire à l'axe X.

La partie centrale tubulaire 14b du palier inférieur 14 reçoit l'extrémité distale 5b de l'axe de l'hélice 5 tandis que l'extrémité proximale 5a est insérée dans partie tubulaire centrale 9 de la couronne 8.

Afin d'assurer une étanchéité parfaite du dispositif 1, des joints annulaires (non représentés) sont prévus au niveau des liaisons entre la bague 3 et l'extrémité 2a du tube 2 ainsi qu'entre la bague 3 et le corps 4.

Un premier joint peut être idéalement placé à l'extrémité de la partie intérieure proximale 3c de la bague 3, contre la couronne 8, et un second sur la partie extérieure distale 3b, contre l'épaulement 7.

La figure 3 montre, en perspective éclatée, le dispositif 1 de la figure 2.

La partie extérieure proximale 3a de la bague 3 est cannelée afin d'assurer une bonne prise en main lors de la fixation sur l'extrémité 2a du tube 2 et une grille 16.est disposée contre la couronne 8, centrée sur la partie tubulaire 9.

Le corps 4, transparent, est fixé sur la bague 3 par l'intermédiaire d'un filetage intérieur 4c.

L'hélice 5 est montée à rotation entre la partie tubulaire 9 de la couronne 8 et le palier inférieur 14 disposé en appui sur l'épaulement 15 du corps 4 (figure 2).

L'hélice 5 présente une forme de pale particulière lui permettant d'entrer en rotation lorsque le fluide (de l'eau par exemple) s'écoule à travers le dispositif 1.

La vitesse de rotation de l'hélice varie donc selon l'importance du débit d'eau.

Ainsi, du fait de la transparence du corps 4, l'utilisateur dispose à tout instant d'une information fiable sur sa consommation, directement liée au débit d'eau et donc à la vitesse de rotation de l'hélice 5.

Selon un autre aspect de l'invention, le dispositif comporte des moyens de visualisation de la température de l'eau.

Ces moyens sont avantageusement intégrés à l'hélice 5, réalisée en un matériau réagissant à la température par une modification de sa teinte.

Cette modification de la teinte selon la température (appelée thermochromisme) s'opère grâce à des procédés connus tel que l'application de micro capsules de colorants de taille et de dispersion définies sur l'hélice 5.

Ainsi, en même temps qu'il surveille ou prend conscience de sa consommation d'eau, grâce à la vitesse de rotation de l'hélice 5, l'utilisateur peut apprécier la température de sortie de l'eau, grâce à la teinte de la dite hélice 5.

L'utilisateur évite ainsi les risques de brûlures puisqu'il n'a pas besoin de toucher le jet d'eau pour avoir une idée de sa température.

En outre, le corps 4 peut recevoir dans sa cavité 13 (figure 2) des réactifs à différents polluants dont la teinte varie en fonction de la teneur de l'eau en ces polluants.

Ainsi, selon la teinte des réactifs, l'utilisateur est informé de la qualité de l'eau, tandis que la vitesse et la teinte de l'hélice 5 l'informe sur son débit et sa température.

Il est à noter que le dispositif 1 peut être adapté à tout tube 2 ou tuyau classique existant.

## Revendications

1. Dispositif apte à être fixé à la sortie d'un tube (2) ou d'un tuyau délivrant un fluide, comprenant des moyens permettant de visualiser le débit ainsi que des moyens permettant de visualiser la température de sortie dudit fluide, les dits moyens de visualisation du débit et de la température étant constitués d'un même élément, **caractérisé en ce que** les dits moyens de visualisation de la température et du débit comprennent une hélice (5), qui est réalisée à partir d'un matériau réagissant aux variations de température.

2. Dispositif selon l'une des revendications précédentes, **caractérisé en ce que** les moyens de visualisation du débit et de la température du fluide sont situés dans l'axe de sortie du fluide.

3. Dispositif selon l'une des revendications précédentes, **caractérisé en ce qu'**il comporte un corps (4) sensiblement cylindrique apte à recevoir les moyens de visualisation du débit et de la température du fluide.

4. Dispositif selon la revendication précédente, **caractérisé en ce que** le corps (4) possède une fenêtre de visualisation transparente.

5. Dispositif selon la revendication 5, **caractérisé en ce que** le corps (4) est totalement transparent.

6. Dispositif selon l' une des revendications précédentes, **caractérisé en ce qu'**il comporte en outre des moyens de filtration, de traitement du fluide ou des réactifs aux polluants inclus dans ce fluide.

## Claims

1. Device adapted to be fixed at the outlet of a tube (2) or pipe delivering a fluid, comprising means for displaying the flow rate as well as means for displaying the outlet temperature of said fluid, said flow rate and temperature display means being constituted by the same element, **characterised in that** said temperature and flow rate display means comprise a propeller (5) being made from a material reacting to variations in temperature.

2. Device according to the preceding claim, **characterised in that** the means for displaying the flow rate and the temperature of the fluid are located in the outlet axis of the fluid.

3. Device according to one of the preceding claims, **characterised in that** it comprises a substantially cylindrical body (4) adapted to receive the means for displaying the flow rate and the temperature of the fluid.

4. Device according to the preceding claim, **characterised in that** the body (4) has a transparent display window.

5. Device according to claim 4, **characterised in that** the body (4) is totally transparent.

6. Device according to one of the preceding claims, **characterised in that** it further comprises means for filtration, for treatment of the fluid or reagents to pollutants contained in the fluid.

## Patentansprüche

1. Vorrichtung, die geeignet ist, am Ausgang eines ein Fluid liefernden Rohres (2) oder Schlauches befestigt zu werden, umfassend Mittel, die es ermöglichen, die Durchflussleistung sichtbar zu machen, sowie Mittel, die es ermöglichen, die Austrittstemperatur des genannten Fluids sichtbar zu machen, wobei die genannten Mittel zum Sichtbarmachen der Durchflussleistung und der Temperatur von ein und demselben Element gebildet wird, **dadurch gekennzeichnet, dass** die genannten Mittel zum Sichtbarmachen der Temperatur und der Durchflussleistung ein Flügelrad (5) umfassen, das aus einem Material ausgeführt ist, das auf Temperaturschwankungen reagiert.

2. Vorrichtung nach dem vorhergehenden Anspruch, **dadurch gekennzeichnet, dass** die Mittel zum Sichtbarmachen der Durchflussleistung und der Temperatur des Fluids in der Austrittsachse des Fluids angeordnet sind.

3. Vorrichtung nach einem der vorhergehenden Ansprüche, **dadurch gekennzeichnet, dass** sie einen im Wesentlichen zylindrischen Körper (4) umfasst, der geeignet ist, die Mittel zum Sichtbarmachen der Durchflussleistung und der Temperatur des Fluids aufzunehmen.

4. Vorrichtung nach dem vorhergehenden Anspruch, **dadurch gekennzeichnet, dass** der Körper (4) ein transparentes Fenster zum Sichtbarmachen besitzt.

5. Vorrichtung nach Anspruch 4, **dadurch gekennzeichnet, dass** der Körper (4) vollständig transparent ist.

6. Vorrichtung nach einem der vorhergehenden Ansprüche, **dadurch gekennzeichnet, dass** sie außerdem Mittel zum Filtern, zum Bearbeiten des Fluids oder der Reagenzien mit den in diesem Fluid enthaltenden Verschmutzungen umfasst.
